# FASCICULE DE BREVET EUROPEEN

(11) **EP 0 483 031 B1**
(45) Date de publication et mention de la délivrance du brevet: **21.12.1994**
(21) Numéro de dépôt: 91420378.1
(22) Date de dépôt: 23.10.1991
(51) Int. Cl.: B29C 59/04

(54) **Procédé d'impression par marquage d'un substrat à base de fibres de verre et nouveau substrat obtenu**
Druckverfahren durch Markieren eines Fiberglassubstrates und das daraus neu erhaltene Substrat
Printing process by marking a substrate based on glass fibres and the new substrate obtained

(30) Priorité: 24.10.1990 FR 9013415
(43) Date de publication de la demande: 29.04.1992
(73) Titulaire: HEXCEL-GENIN Société Anonyme:, F-69608 Villeurbanne Cédex (FR)
(72) Inventeur: Forin, Roger Guy, F-74600 Seynod (FR)
(74) Mandataire: Ropital-Bonvarlet, Claude

(56) Documents cités:
- DE-A- 2 817 566
- DE-A- 3 436 065
- DE-C- 816 805
- FR-A- 1 482 151
- PATENT ABSTRACTS OF JAPAN, vol. 9, no. 303 (M-434)[2026], 30 novembre 1985;& JP-A-60 141 526 (KONSAISU K.K.) 26-07-1985

## Description

La présente invention est relative aux produits à base de fibres de verre et elle concerne, plus particulièrement, ceux de ces produits qu'il convient d'individualiser ou de personnaliser au moins localement par une ou plusieurs impressions visuellement perceptibles.

L'invention concerne plus spécifiquement, à titre d'application préférée non limitative, les substrats en nappe textile plus ou moins translucide par la nature du matériau, sa coloration interne ou sa contexture, sur lesquels il convient d'apporter des impressions décoratives en fonction de leurs applications futures à titre d'écran lumineux, d'atténuation, de diffusion ou encore de revêtement décoratif.

Des substrats du type ci-dessus sont fréquemment utilisés en feuilles, nappes ou bandes pour constituer des écrans, des rideaux ou des panneaux diffuseurs ou atténuateurs de la lumière ou encore des revêtements décoratifs.

En vue de rompre l'uniformité présentée par de tels produits, il a été envisagé de les colorer sous une présentation de teintes uniformes. Une telle coloration ne peut pas être considérée comme apportant une impression décorative particulièrement recherchée.

Dans le but de pallier cet inconvénient, il a été préconisé d'assurer le tissage de ces nappes textiles, de façon à faire apparaître, soit des armures, soit des motifs résultant d'un entrelacement spécifique, particulier, localisé de certaines fibres, brins ou torons.

Une grande variété de motifs a pû ainsi être obtenue, mais l'aspect esthétique et décoratif procuré n'apparaît pas, cependant, de façon certaine, claire, distincte et se trouve aussi dans, tous les cas, limité en motifs possibles par la contrainte incontournable de la possibilité technique d'entrelacement des brins, fils, fibres ou torons.

Pour obtenir des motifs variés, une telle contrainte pose des problèmes de difficultés de réalisation, voire des impossibilités et se traduit, dans le cas de faisabilité, par une augmentation importante du prix de revient à l'unité de surface ou de longueur.

La présente invention vise à remédier aux inconvénients ci-dessus en proposant un nouveau procédé d'impression de substrats à base de fibres de verre, nouveau procédé permettant d'obtenir, à un prix de revient intéressant, une grande richesse et variété de motifs ou d'impressions, de décorations, d'identifications ou de personnalisations susceptibles de présenter, de surcroît, un aspect esthétique et décoratif certain.

Pour atteindre les objectifs ci-dessus, le procédé d'impression d'un substrat à base de fibres de verre est caractérisé en ce qu'il consiste à revêtir, au moins en partie, l'une au moins des faces dudit substrat d'un film de matière thermofusible et à exécuter, en surface dudit film, des impressions mates au moins par fluage à chaud localisé de ladite matière thermofusible.

L'invention a également pour objet un nouveau substrat à base de fibres de verre caractérisé en ce qu'il comporte au moins localement, sur au moins l'une de ses faces, un film de matière thermofusible présentant en surface des impressions mates localisées.

Le procédé de l'invention est décrit ci-après dans son application préférée à l'impression de substrats se présentant sous la forme de nappe textile réalisée à partir de fibres de verre, selon une technique connue quine fait pas partie de l'invention. De telles nappes textiles présentent, généralement par le choix de la matière constitutive ou encore de l'armure, une plus ou moins grande translucidité, en vue de pouvoir être utilisée principalement en tant que panneau, écran, diffuseur ou atténuateur d'un flux lumineux.

Il va de soi que l'objet de l'invention peut être mis en oeuvre pour tout autre type de substrat, au moins en partie à base de fibres de verre, qu'il soit souple, flexible, compact, de faible ou de forte épaisseur.

Le procédé selon l'invention consiste à revêtir, au moins en partie, l'une au moins des faces du substrat d'un film de matière thermofusible de nature transparente, translucide ou légèrement colorée. Le film est déposé de toute manière convenable compatible avec la nature du substrat. Un procédé convenant particulièrement bien dans le cas de substrats en forme de nappe textile, souple ou relativement souple, est le dépôt par enduction, par passage par défilement continu au sein d'un bain ou bac d'enduction contenant une solution liquide de la matière thermofusible choisie. Un dépôt par contre-collage peut aussi être envisagé. Parmi les nombreuses possibilités offertes par la technique des matières plastiques, une matière de revêtement ou de constitution du film convenant particulièrement bien est le chlorure de polyvinyle, bien que le recours à une matière acrylique puisse également être envisagé de façon toute aussi satisfaisante.

L'apport ou le dépôt du film de matière thermofusible est effectué à raison d'au moins 6 % en poids d'extraits secs de ladite matière par rapport au poids du substrat, et de préférence, de 8 à 35 %.

Le dépôt du film est effectué selon les conditions habituelles pour que le film adhère de façon ferme et résistante au substrat sur lequel il est fixé par polymérisation ou durcissement, généralement par voie thermique.

Après l'accomplissement de la phase préparatoire ci-dessus, le substrat est soumis à un marquage à chaud, de manière à produire, en surface du film, des marques au moins par fluage à chaud localisé de la matière thermofusible qui, après refroidissement, laisse apparaître des impressions mates et lisses correspondant exactement en formes et contours à la ou aux empreintes positives de l'outil de marquage utilisé qui peut, bien entendu, être plan ou de révolution.

Le marquage à chaud est exécuté en appliquant temporairement une température comprise entre 60 et 200 °C et en exerçant, par l'outil de marquage, une pression voisine de 5.10⁵ P sur le film de matière thermofusible.

L'opération de marquage à chaud peut être conduite par l'intermédiaire d'une presse ou encore par un procédé de défilement en continu du substrat entre un cylindre marqueur chauffant et un cylindre d'appui dont la périphérie est alors avantageusement pourvue d'un revêtement compressible tel qu'en élastomère présentant une dureté Shore de 60 à 90. Dans un tel cas, les cylindres sont entraînés en rotations inverses synchrones, de manière à provoquer le défilement du substrat à une vitesse pouvant être comprise entre 2 et 20 mètres par minute. Dans un tel cas aussi, la pression exercée sur le substrat par les deux cylindres est réglée de manière à faire intervenir environ 5 à 15 tonnes sur la longueur axiale de contact entre les génératrices des cylindres.

Dans tous les cas, les conditions opératoires de pression et de température sont retenues en fonction de la matière thermofusible constitutive du film, de manière que le marquage à chaud produise, par l'empreinte de l'outil de marquage, au moins un ramollissement de surface de la matière thermofusible, favorable à l'établissement au moins d'un fluage de surface, se traduisant, après refroidissement, par l'existence indélébile d'une marque, généralement à caractère opacifiant, présentant un état de surface lisse pouvant ainsi être aisément apprécié visuellement par rapport à l'état général du film, que ce dernier soit directement ou indirectement perceptible visuellement, en raison de sa translucidité, de sa faible épaisseur ou de l'absence de contrastes qu'il présente par rapport aux fibres de verre constitutives du substrat sous-jacent.

Les impressions ainsi portées sont visuellement perceptibles directement et plus encore par effet de transparence, lorsque le substrat, préférentiellement du type retenu ci-avant, est interposé entre un observateur et une source lumineuse.

Les expérimentations qui ont été conduites ont permis d'obtenir de très bons résultats sur des bandes de nappe textile tissée, coloriée, travaillée dans le but de constituer des écrans diffuseurs ou atténuateurs de lumière en mettant en oeuvre les paramètres ci-dessous.

### EXEMPLE 1 :

Un substrat de type nappe textile, constitué à base de fibres de verre de 165 g/m² tissées selon une armure toile, a été revêtu sur au moins l'une de ses faces d'un film de chlorure de polyvinyle, à raison de 30 % en poids d'extraits secs par rapport au poids du substrat.

Un tel substrat a été traité en défilement continu entre des cylindres d'appui et de chauffage et d'impression tournant à des vitesses synchrones inverses de 10 mètres par minute.

Le cylindre marqueur chauffant était maintenu à une température égale à 130 ° C et exerçait sur le substrat une pression de 10 tonnes sur 160 centimètres de longueur axiale de cylindre.

Des impressions en motifs continus et/ou discontinus ont été obtenues de façon durable en surface du film, sans altération de ce dernier, ni distorsion ou dégradation du substrat, de telles impressions se caractérisant par un lissé de surface et une opacification partielle, localisée, limitée exactement aux contours de :'empreinte ou des empreintes du cylindre marqueur et chauffant.

### EXEMPLE 2 :

Un même substrat a été traité comme dans l'exemple 1 en mettant, toutefois, en oeuvre une température de 80 ° C, une même pression et une vitesse de 5,5 mètres par minute.

Dans les deux cas, des impressions d'aspect généralement mat comprenant un lissé de surface et un caractère généralement opacifiant ont pû être réalisées et exécutées de façon précise, selon des motifs excessivement variés, en présentant une résistance au vieillissement sans qu'une altération du film ou du substrat ait été considérée ou constatée.

L'invention concerne également le nouveau produit obtenu qui se caractérise par un substrat à base de fibres de verre que ce dernier soit compact, souple ou flexible ou encore exécuté sous la forme d'une nappe textile, d'armure quelconque, dont la contexture confère un caractère de transparence plus moins accentué. Un tel produit nouveau se caractérise par l'existence en surface sur l'une au moins des faces du substrat, d'impressions résultant d'un marquage à chaud ayant modifié l'état de la matière thermofusible, au point de faire apparaître des marques lisses, mates et à caractére opacifiant dans le cas plus particulier de recours à une matière thermofusible de caractère translucide rapportée sur un substrat à caractère transparent.

L'invention n'est pas limitée aux exemples décrits et représentés, car diverses modifications peuvent y être apportées sans sortir de son cadre.

## Revendications

1. Procédé d'impression par marquage d'un substrat à base de fibres de verre, caractérisé en ce qu'il consiste à revêtir au moins en partie, l'une au moins des faces dudit substrat d'un film de matière thermofusible et à exécuter, en surface dudit film, des impressions mates au moins par fluage à chaud localisé de ladite matière thermofusible.

2. Procédé selon la revendication 1, caractérisé en ce qu'on apporte le film de matière thermofusible à raison d'au moins 6 % en poids d'extraits secs par rapport au poids du substrat.

3. Procédé selon la revendication 1 ou 2, caractérisé en ce qu'on apporte un film de matière thermofusible au moins translucide et en ce qu'on exécute des impressions mates opacifiées au moins par fluage à chaud.

4. Procédé selon la revendication 1 ou 3, caractérisé en ce qu'on exécute les impressions en appliquant localement une température comprise entre 60 et 200 °C.

5. Procédé selon la revendication 4, caractérisé en ce qu'on exécute les impressions en appliquant à l'outil de marquage une pression voisine de 5.10⁵ P.

6. Procédé selon l'une des revendication 1 à 5, caractérisé en ce qu'on exécute les impressions par défilement en continu du substrat entre un cylindre marqueur et chauffant et un cylindre d'appui et en ce que les cylindres sont entraînés en rotations inverses synchrones pour provoquer un défilement du substrat à une vitesse de 2 à 20 mètres par minute.

7. Procédé selon la revendication 6, caractérisé en ce que les cylindres exercent sur le substrat une pression comprise entre 5 et 15 tonnes appliquée sur une longueur axiale de cylindre voisine de 160 centimètres.

8. Substrat à base de fibres de verre, caractérisé en ce qu'il comporte, au moins localement sur au moins l'une de ses faces, un film de matière thermofusible présentant en surface des impressions mates localisées.

9. Substrat selon la revendication 8, caractérisé en ce que le film de matière thermofusible est au moins translucide.

10. Substrat selon la revendication 8 ou 9, caractérisé en ce qu'il est constitué par une nappe textile à caractère translucide, dont l'une des faces au moins est revêtue d'un film de matière thermofusible faisant apparaître au moins par transparence des impressions mates localisées opacifiantes.

## Claims

1. Process for printing by marking a substrate based on glass fibers, characterized in that it consists in coating, at least in part, at least one of the faces of said substrate with a film of heat-fusible material and in making on the surface of said film, matt imprints at least by localized hot creeping of said heat-fusible material.

2. Process according to Claim 1, characterized in the the film of heat-fusible material is added at a rate of at least 6% by weight of dry extracts with respect to the weight of the substrate.

3. Process according to Claim 1 or 2, characterized in that a film of at least translucent heat-fusible material is added and opacified matt imprints are made at least by hot creeping.

4. Process according to Claim 1 or 3, characterized in that the imprints are made by locally applying a temperature of between 60 and 200°C.

5. Process according to Claim 4, characterized in that the imprints are made by applying to the marking tool a pressure close to 5.10⁵P.

6. Process according to one of Claims 1 to 5, characterized in that the imprints are made by continuously advancing the substrate between a heating marker cylinder and a support cylinder and in that the cylinders are driven synchronously in opposite directions to cause the substrate to advance at a speed of 2 to 20 metres per minute.

7. Process according to Claim 6, characterized in that the cylinders exert on the substrate a pressure of between 5 and 15 tons applied over an axial length of cylinder close to 160 centimetres.

8. Substrate based on glass fibers, characterized in that it comprises, at least locally on at least one of its faces, a film of heat-fusible material presenting on the surface localized matt imprints.

9. Substrate according to Claim 8, characterized in that the film of heat-fusible material is at least translucent.

10. Substrate according to Claim 8 or 9, characterized in that it is constituted by a textile fabric of translucent character, of which at least one of the faces is coated with a film of heat-fusible material showing at least by transparency localized opacifying matt imprints.

## Patentansprüche

1. Druckverfahren durch Markieren eines Substrats auf Glasfasergrundlage,
gekennzeichnet durch
wenigstens teilweises Überziehen wenigstens einer der Seiten des Substrats mit einem Film aus warmschmelzbarem Material und das Herstellen matter Aufdrucke auf der Oberfläche des Films durch örtlich begrenztes Warmfließen des warmschmelzbaren Materials.

2. Verfahren nach Anspruch 1, dadurch gekennzeichnet, daß der Film aus warmschmelzbarem Material im Verhältnis von wenigstens 6% Trockenmasse bezogen auf das Gewicht des Substrats aufgebracht wird.

3. Verfahren nach Anspruch 1 oder 2, dadurch gekennzeichnet, daß ein Film aus warmschmelzbarem Material aufgebracht wird, der wenigstens durchscheinend ist, und daß matte, undurchsichtige Aufdrucke wenigstens durch Warmfließen hergestellt werden.

4. Verfahren nach Anspruch 1 oder 3, dadurch gekennzeichnet, daß die Aufdrucke hergestellt werden, indem lokal eine Temperatur zwischen 60 und 200 °C angewandt wird.

5. Verfahren nach Anspruch 4, dadurch gekennzeichnet, daß die Aufdrucke durch Aufbringen eines Drucks von ca. 5 · 10⁵ Pa auf das Markierwerkzeug hergestellt werden.

6. Verfahren nach einem der Ansprüche 1 bis 5, dadurch gekennzeichnet, daß die Aufdrucke durch kontinuierlichen Durchlauf des Substrats zwischen einem heizenden Markierzylinder und einem Druckzylinder ausgeführt werden und daß die Zylinder entgegengesetzt synchron drehangetrieben werden, um einen Durchlauf des Substrats mit einer Geschwindigkeit von 2 bis 20 m/min zu bewirken.

7. Verfahren nach Anspruch 6, dadurch gekennzeichnet, daß die Zylinder auf das Substrat einen Druck von 5 bis 15 t auf einer axialen Länge des Zylinders von ca. 160 cm ausüben.

8. Substrat auf Glasfasergrundlage,
dadurch gekennzeichnet, daß
es wenigstens örtlich auf wenigstens einer seiner Seiten einen Film aus warmschmelzbarem Material umfaßt, der auf seiner Oberfläche matte, örtlich begrenzte Aufdrucke aufweist.

9. Substrat nach Anspruch 8, dadurch gekennzeichnet, daß der Film aus warmschmelzbarem Material Wenigstens durchscheinend ist.

10. Substrat nach Anspruch 8 oder 9, dadurch gekennzeichnet, daß er aus einer durchscheinenden Textillage besteht, von der wenigstens eine Seite mit einem Film aus warmschmelzbarem Material überzogen ist, das wenigstens durch Transparenz örtlich begrenzte matte, undurchsichtige Aufdrucke erscheinen läßt.
